(19) Europäisches Patentamt / European Patent Office / Office européen des brevets

(11) **EP 3 904 983 B1**

(12) **EUROPEAN PATENT SPECIFICATION**

(45) Date of publication and mention
of the grant of the patent:
**30.10.2024 Bulletin 2024/44**

(21) Application number: **19928091.8**

(22) Date of filing: **09.05.2019**

(51) International Patent Classification (IPC):
**G05B 19/4065** *(2006.01)*    **B23Q 17/09** *(2006.01)*

(52) Cooperative Patent Classification (CPC):
**G05B 19/4065;** G05B 2219/37245;
G05B 2219/37252; G05B 2219/37256;
G05B 2219/37258

(86) International application number:
**PCT/CN2019/086262**

(87) International publication number:
**WO 2020/223965 (12.11.2020 Gazette 2020/46)**

(54) **TOOL REPLACEMENT RECORD-BASED CUTTING TOOL LIFE SETTING METHOD, APPARATUS AND SYSTEM**

VERFAHREN, VORRICHTUNG UND SYSTEM ZUM EINSTELLEN DER LEBENSDAUER VON SCHNEIDWERKZEUGEN BASIEREND AUF WERKZEUGWECHSELAUFZEICHNUNGEN

PROCÉDÉ, APPAREIL ET SYSTÈME DE RÉGLAGE DE DURÉE DE VIE D'OUTIL DE COUPE À BASE D'ENREGISTREMENT DE REMPLACEMENT D'OUTIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.11.2021 Bulletin 2021/44**

(73) Proprietor: **Siemens Aktiengesellschaft
80333 München (DE)**

(72) Inventors:
• **FENG, Cheng
  Beijing 100102 (CN)**
• **SCHNEEGASS, Daniel
  Beijing 110105 (CN)**
• **QU, Ying
  Beijing 100121 (CN)**
• **TIAN, Peng Wei
  Beijing 100121 (CN)**
• **YU, Yue
  Suzhou, Jiangsu 215000 (CN)**

• **LOH, Chang Wei
  Suzhou, Jiangsu 215123 (CN)**

(74) Representative: **Isarpatent
Patent- und Rechtsanwälte Barth
Charles Hassa Peckmann & Partner mbB
Friedrichstrasse 31
80801 München (DE)**

(56) References cited:
EP-A1- 0 509 817     CN-A- 103 793 762
CN-A- 105 033 719     CN-A- 105 160 147
CN-A- 108 907 896     JP-A- 2001 150 300
JP-A- H05 329 748     US-A1- 2018 181 105

• T ET AL: "On-Line Monitoring of Tool Breakage in Face Milling Using a Self-Organized Neural Network", JOURNAL OF MANUFACTURING SYSTEMS, SOCIETY OF MANUFACTURING ENGINEERS, DEARBORN, MI, US, vol. 14, no. 2, 1 January 1995 (1995-01-01), pages 80 - 90, XP004002194, ISSN: 0278-6125

## Description

## Technical Field

The present invention relates to the technical field of cutting tools, and in particular to a cutting tool life setting method, apparatus, and system.

## Background Art

Cutting is an important area of manufacturing, and the performance of a cutting tool directly influences machining results. When precision machining is required, it is important to determine the optimal life of a cutting tool. On the one hand, if an excessively short service life is set, too much remaining life of the cutting tool may be wasted, which will incur unnecessary manufacturing costs; on the other hand, if an excessively long service life is set, the cutting tool may fail frequently, resulting in production delays, and even a reduction in the overall quality of produced workpieces. Therefore, it is often necessary to strike a balance between manufacturing costs and risks of tool failure by setting the optimal life of a cutting tool. Documents EP0509817 A1 and US2018/181105 A1 disclose methods to estimate the life of a cutting tool.

The service life of a cutting tool is influenced by a number of factors, including the type and various cutting parameters, such as cutting feed speed, rotation speed, cutting duration, and workpiece material, of the cutting tool. Therefore, when so many factors have an influence, it is difficult to determine the optimal life on the basis of human experience alone. Moreover, in practice, an operator may wish to adjust cutting parameters often according to a manufacturing schedule. It is usually too expensive or even unfeasible to set the optimal life of a cutting tool by performing tool failure experiments.

Currently, the service life of a cutting tool may be set by a static method or a dynamic method.

With a static method, a static life is set for the cutting tool; then, the tool will be replaced due to a failure or because it reaches the preset maximum number of cuts (that is, service life). The implementation of such a method is very simple; however, it is well known that, in the precision machining industry, the setting of the service life of a cutting tool mainly depends on human experience or tool failure experiments. In the former case, high expertise is required, and an operator has to be very familiar with the production process of a workpiece; in addition, since the optimal life of a cutting tool is influenced by various factors, a decision made by a human operator is usually not optimal. In the latter case, tool failure experiments are usually performed to establish a service life distribution model of a cutting tool; as a result, additional economic and time costs are incurred, which is unacceptable in many real-world situations.

With a dynamic method, a cutting tool is dynamically replaced by monitoring its wear status. While such a method may be more effective, its implementation is much more complicated. Specifically, it requires collection of information, such as vibration and current, by sensors, and simulation of the relationship between tool wear and sensor data by a specific algorithm. Thus, in practice, many factories, especially those that have not become highly digitized, cannot afford to adopt such a method.

Therefore, there is a need for an improved method and apparatus for setting a cutting tool life to overcome the above-described and other problems.

## Summary of the Invention

Against the above-described background, the present invention provides an efficient, robust, and more economical method, apparatus and system for setting a cutting tool life, which makes it possible to set the optimal life of a target cutting tool by using a set of newly defined cutting parameters that has never been used.

In a first aspect, an embodiment of the present invention provides a cutting tool life setting method, comprising:

obtaining at least two groups of previous cutting parameters of a cutting tool;
for each of the obtained at least two groups of previous cutting parameters,
obtaining at least two tool replacement records of the cutting tool when the group of previous cutting parameters is used;
fitting the failure time distribution of the cutting tool on the basis of the at least two tool replacement records of the cutting tool when the group of previous cutting parameters is used;
receiving a group of predefined cutting parameters of a target cutting tool; and
setting the tool life of the target cutting tool according to the group of predefined cutting parameters, the at least two groups of previous cutting parameters, and the failure time distribution corresponding to each group of previous cutting parameters.

The term "cutting tool" refers to a tool for cutting in machine manufacturing. In the context of this description, unlike a "target cutting tool", the "cutting tool" may be one or more used cutting tools. The term "groups of previous cutting parameters" refers to one or more groups of specific cutting parameters used by a used cutting tool. The term "cutting parameter" includes at least one of the types in the following group: cutting feed speed, rotation speed, cutting duration, and material of the workpiece to be processed. Those of ordinary skill in the art can predict other cutting parameters suitable for fitting the failure time distribution. The term "tool replacement record" may be, for example, the time when a tool was replaced. The term "failure time distribution" refers to a probability distribution of failure of a cutting tool over time under a group of specific cutting parameters. According to the principle embodied by the present invention, with the above-described cutting tool life setting method, the tool replacement records of all used cutting tools and the cutting parameters corresponding thereto are used to establish a relationship between the cutting parameters and the failure time distribution. Then, for a group of unused cutting parameters (that is, the group of predefined cutting parameters), the failure time distribution of the target cutting tool is predicted and a tool life of the target cutting tool is calculated. Compared with a conventional static method, this method is more efficient, robust and versatile because it is driven by data and does not require great expertise or tool failure experiments to set the optimal life for a cutting tool under unused cutting parameters. Compared with a conventional dynamic method, this method is more economical because it does not require any additional hardware (such as a sensor) for monitoring the wear status of a cutting tool to determine its optimal service life.

In an example of the present invention, fitting the failure time distribution of a cutting tool on the basis of at least two tool replacement records of the cutting tool when a group of previous cutting parameters is used may preferably comprise: on the basis of at least two tool replacement records of the cutting tool when the group of previous cutting parameters is used, deriving a failure data set $X_f$ and a survival data set $X_s$ of the cutting tool when the group of previous cutting parameters is used, wherein the failure data set includes a tool replacement record indicating that the cutting tool was replaced due to a cutting tool failure during the $(x_f)$th cut, where $x_f \square X_f$, and the survival data set includes a tool replacement record indicating that the cutting tool had survived by the $(x_s)$th cut and was replaced when its preset service life ended, where $x_s \square X_s$; and determining the distribution parameters of the failure time distribution corresponding to the group of previous cutting parameters according to the failure data set and the survival data set, so that the likelihood of data in the two data sets including the failure data set and the survival data set is maximized. The inventor of the present invention was the first to propose the use of an actual replacement record of each cutting tool to fit the failure time distribution of the cutting tool, thereby predicting the failure time distribution of a (target) cutting tool under a group of unused cutting parameters.

In another example of the present invention, setting the tool life of the target cutting tool according to the group of predefined cutting parameters, the at least two groups of previous cutting parameters, and the failure time distribution preferably comprises: calculating a prior distribution of distribution parameters for predicting the failure time distribution of the target cutting tool according to the group of predefined cutting parameters, the at least two groups of previous cutting parameters, and distribution parameters of failure time distribution obtained by fitting with tool replacement records corresponding to the at least two groups of previous cutting parameters; and calculating the tool life of the target cutting tool according to the prior distribution of distribution parameters for predicting the failure time distribution of the target cutting tool. Thus, it is possible to, before a cutting tool is used, predict its service life accurately by means of a prior distribution alone. Compared with the service life of a cutting tool that is predicted on the basis of the experience of an expert, a more accurate result may be obtained by determining a prior distribution of distribution parameters for predicting a failure time distribution according to previous replacement records and cutting parameters of a cutting tool, and then determining the tool life of the (target) cutting tool according to the prior distribution.

In yet another example of the present invention, the prior distribution of distribution parameters for predicting the failure time distribution of the target cutting tool includes respective prior distributions of a shape parameter and a scale parameter for predicting a failure time distribution. In this case, the method further comprises calculating the tool life of the target cutting tool on the basis of a prior distribution of the shape parameter and a prior distribution of the scale parameter for predicting a failure time distribution. Preferably, the Weibull distribution may be used to fit the failure time distribution of a cutting tool. The Weibull distribution is parameterized by a shape parameter $\alpha$ and a scale parameter $\beta$. Therefore, the parameters of the Weibull distribution may be used to calculate a tool life, so that the Weibull distribution may be used to calculate a tool life.

In yet another example of the present invention, the method preferably further comprises keeping a tool replacement record of a target cutting tool when the group of predefined cutting parameters is used; calculating a prior distribution of distribution parameters for predicting the failure time distribution of the target cutting tool according to the group of predefined cutting parameters, the at least two groups of previous cutting parameters, and distribution parameters of failure time distribution obtained by fitting with tool replacement records corresponding to the at least two groups of previous cutting parameters; and updating the tool life of the target cutting tool by using the tool replacement record of the target cutting tool and a prior distribution of distribution parameters for predicting the failure time distribution of the target cutting tool. Thus, the present invention makes it possible to dynamically update the optimal life of a target cutting tool after it has actually been used.

In yet another example of the present invention, updating the tool life of the target cutting tool by using the tool replacement record of the target cutting tool and a prior distribution of distribution parameters for predicting the failure time distribution of the target cutting tool preferably comprises: on the basis of the tool replacement record of the target cutting tool, deriving a failure data set and a survival data set of the target cutting tool when the group of predefined cutting parameters is used, wherein the failure data set includes a tool replacement record indicating that the target cutting tool was replaced due to a target cutting tool failure during the $(x_f)$th cut, where $x\varepsilon \square X_f$, and the survival data set includes a tool replacement record indicating that the target cutting tool had survived by the $(x_s)$th cut and was replaced when its preset service life ended, where $x_s \square X_s$; and calculating a posterior distribution of distribution parameters of the failure time distribution of the target cutting tool by using the tool replacement record of the target cutting tool and a prior distribution of distribution parameters for predicting the failure time distribution of the target cutting tool; and updating the tool life of the target cutting tool on the basis of the posterior distribution of distribution parameters of the failure time distribution of the target cutting tool.

In yet another example of the present invention, a posterior distribution of distribution parameters for predicting the failure time distribution of the target cutting tool includes respective posterior distributions of a shape parameter and a scale parameter for predicting a failure time distribution. In this case, the method further comprises updating the tool life of the target cutting tool on the basis of at least a posterior distribution of the shape parameter and a posterior distribution of the scale parameter for predicting a failure time distribution. Thus, a posterior distribution of distribution parameters for predicting a failure time distribution is determined according to replacement records of a cutting tool after it has actually been used and cutting parameters, and then the tool life of the target cutting tool is dynamically updated on the basis of the posterior distribution, so that a predicted service life of the tool may be continuously corrected.

In a second aspect, an embodiment of the present invention provides a machine-readable medium storing machine-readable code that is configured to, when run by a suitable machine or processor, cause the machine or processor to implement the method as described in any of the preceding paragraphs.

In a third aspect, an embodiment of the present invention provides a computational device that comprises at least one memory and at least one processor. The at least one memory is configured to store a machine-executable instruction that, when executed by the at least one processor, causes the at least one processor to implement the method as described in any of the preceding paragraphs.

In a fourth aspect, an embodiment of the present invention provides a cutting tool life setting apparatus, comprising:

> a receiving unit configured to obtain at least two groups of previous cutting parameters of a cutting tool, and at least two tool replacement records of the cutting tool when each of the at least two groups of previous cutting parameters is used; and
> a computational unit configured to

>> fit the failure time distribution of the cutting tool on the basis of the at least two tool replacement records of a cutting tool when each group of previous cutting parameters is used;
>> receive a group of predefined cutting parameters of a target cutting tool; and
>> set the tool life of the target cutting tool according to the group of predefined cutting parameters, the at least two groups of previous cutting parameters, and the failure time distribution corresponding to each group of previous cutting parameters.

In a fifth aspect, an embodiment of the present invention provides a tool life computational system, comprising the cutting tool life setting apparatus as described in the preceding paragraphs, and a recording unit. The recording unit is configured to keep a tool replacement record of a target cutting tool when a group of predefined cutting parameters is used, and send the tool replacement record of the target cutting tool to a receiving unit of the setting apparatus.

With such a cutting tool life setting apparatus, the present invention makes it possible to set a tool life more simply, economically, efficiently, and robustly. In addition, the present invention further provides a strategy for dynamically adjusting the optimal service life of a cutting tool. Based on tool replacement records alone, the present invention is easier to design and less expensive.

Those of ordinary skill in the art will become aware of other aspects of the present application after reading and understanding the description.

**Brief Description of the Drawings**

The present invention will be explained in greater detail below in conjunction with embodiments and with reference to the drawings. In the drawings:

Figure 1 shows an overall flowchart of a tool life setting method 100 provided by an embodiment of the present invention;

Figure 2 is a block diagram of a tool life setting computational device 200 provided by an embodiment of the present invention;

Figure 3 is a structural block diagram for a tool life setting computational system 300 provided by an embodiment of the present invention;

Figure 4 is a diagram comparing the fitted survival function and the experimental survival function of a cutting tool under a group of specific cutting parameters provided by an embodiment of the specification;

Figure 5 is a diagram comparing the dynamically adjusted optimal life provided by an embodiment of the present invention and the baseline; and

Figure 6 is a diagram comparing the dynamically adjusted optimal life provided by another embodiment of the present invention and the baseline.

List of reference numerals:

100: Cutting tool life setting method
110: Obtain at least two groups of previous cutting parameters of the cutting tool
120: Obtain at least two tool replacement records of the cutting tool when each group of previous cutting parameters is used
130: Fit the failure time distribution of the cutting tool
140: Receive a group of predefined cutting parameters of a target cutting tool
150: Set the tool life of the target cutting tool
160: Keep a tool replacement record of the target cutting tool
170: Calculate a prior distribution of distribution parameters for predicting the failure time distribution of the target cutting tool
180: Update the tool life of the target cutting tool
200: Computational device
210: At least one memory
220: At least one processor
300: Tool life computational system
310: Tool life setting apparatus
312: Receiving unit
314: Computational unit
320: Recording unit
410: Fitted survival function
420: Preset cutting tool life
430: Experimental survival function
510: Optimal tool life dynamically adjusted from a good initial tool life
520: Maximum likelihood estimate of the optimal tool life on the basis of a good initial tool life
530: True optimal tool life
610: Optimal tool life dynamically adjusted from a poor initial tool life
620: Maximum likelihood estimate of the optimal tool life on the basis of a poor initial tool life
630: True optimal tool life

**Specific Embodiments**

As described earlier, when precision machining is required, setting the optimal life of a cutting tool is an important parameter for striking a balance between cost and risks of tool failure. At present, either a cutting tool life is statically set on the basis of human experience or tool failure experiments, or the wear status of a cutting tool is monitored dynamically to determine whether a replacement is needed. However, the former method requires extensive expert experience, and is time-consuming and material-intensive, while the latter method is costly and requires additional special measuring equipment and complex analysis software. Therefore, the present invention was the first to propose the use of tool replacement records to establish the failure time distribution of a cutting tool, thereby allowing the optimal life of the target cutting tool to be set under a newly defined cutting parameter set that has never been used. Compared with the prior art, this method is more efficient, robust, and economical. Moreover, a conventional method only allows the determination of the service life of a used cutting tool under used cutting parameters. In contrast, a method of the present invention allows the determination of the optimal life of the target cutting tool under a newly defined cutting parameter set that has never been used.

A method and apparatus provided by an embodiment of the present invention will be described in detail below in conjunction with the drawings.

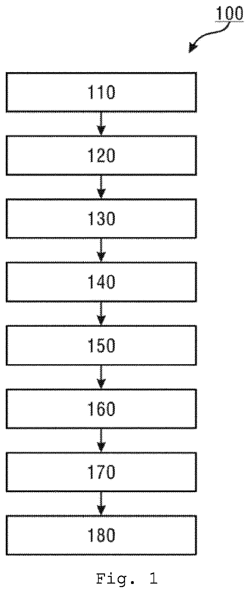

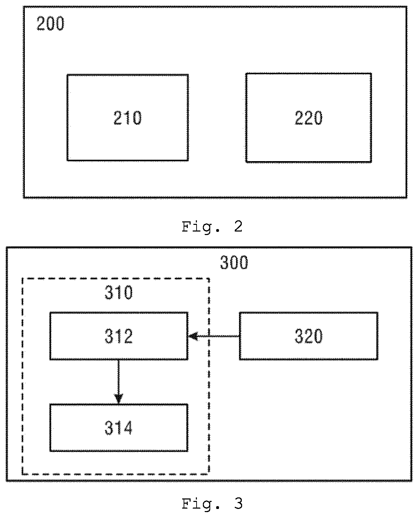

Figure 1 is an overall flowchart of a tool life setting method 100 provided by an embodiment of the present invention. The method may preferably be implemented by the computational device 200 shown in Figure 2 or a computer processor. It is understandable that the method 100 may also be implemented in other manners, for example by the tool life setting computational system 300 shown in Figure 3 or another computational apparatus.

In step 110, at least two groups of previous cutting parameters of a cutting tool (not shown) are obtained. The "cutting tool" refers to a tool for cutting in machine manufacturing. In the context of this description, unlike a "target cutting tool", the "cutting tool" may be one or more used cutting tools. Thus, for example, the "at least two groups of previous cutting parameters" may be obtained by inputting, with an input device, a plurality of groups of specific cutting parameters used by a used cutting tool. The "cutting parameters" include at least one of the types in the following group: cutting feed speed, rotation speed, cutting duration, and material of the workpiece to be processed. Those of ordinary skill in the art can predict other cutting parameters suitable for fitting the failure time distribution.

In step 120, for each of the obtained at least two groups of previous cutting parameters, at least two tool replacement records of the cutting tool are obtained when the group of previous cutting parameters is used. Under a specific type of cutting parameters (for example, the cutting feed speed, rotation speed, cutting duration, and material of workpiece to be processed that are set for a specific workpiece), the time when this kind of cutting tool was replaced is recorded. In one example, specific cutting parameters and corresponding tool replacement records may be recorded in the same piece of data. Therefore, the "previous cutting parameters" and "tool replacement records" may be obtained by reading the data.

In step 130, for each of the obtained at least two groups of previous cutting parameters, the failure time distribution of the cutting tool is fitted on the basis of at least two tool replacement records of the cutting tool when the group of previous cutting parameters is used. The "failure time distribution" refers to a probability distribution of failure of a cutting tool over time under used cutting parameters. Since the service life of a cutting tool under each group of previous cutting parameters conforms to a certain distribution, each group of previous cutting parameters will correlate with the failure time distribution fitted using the corresponding tool replacement record.

In one example, on the basis of at least two tool replacement records of the cutting tool when the group of previous cutting parameters is used, a failure data set $X_f$ and a survival data set $X_s$ of the cutting tool are derived when the group of previous cutting parameters is used, wherein the failure data set includes a tool replacement record indicating that the cutting tool was replaced due to a cutting tool failure during the $(x_f)$th cut, where $x_f \square X_f$, and the survival data set includes a tool replacement record indicating that the cutting tool had survived by the $(x_s)$th cut and was replaced when its preset service life ended, where $x_s \square X_s$; and the distribution parameters of the failure time distribution corresponding to the group of previous cutting parameters according to the failure data set and the survival data set are determined, so that the likelihood of data in the two data sets including the failure data set and the survival data set is maximized.

In one example, the Weibull distribution may be used to fit the failure time distribution of a cutting tool. More specifically, the Weibull distribution is widely used to fit "failure time" data in industrial fields. The distribution is parameterized by a shape parameter $\alpha$ and a scale parameter $\beta$, and its probability density function (PDF) is expressed as follows:

$$f(x; \alpha, \beta) = \begin{cases} \left(\frac{\alpha}{\beta}\right)\left(\frac{x}{\beta}\right)^{\alpha-1} e^{-\left(\frac{x}{\beta}\right)^{\alpha}} & if\ x \geq 0 \\ 0 & if\ x < 0 \end{cases} \qquad (1)$$

where x indicates the number of cuts that have been made, and $f(x; \alpha, \beta)$ indicates the probability of tool failure during the xth cut. The corresponding cumulative density function (CDF) may be expressed as the following formula (2):

$$F(x; \alpha, \beta) = 1 - e^{-\left(\frac{x}{\beta}\right)^{\alpha}} \qquad (2)$$

where $F(x; \alpha, \beta)$ indicates the probability of cutting tool failure before the xth cut. On the basis of the CDF, the survival function (SF) may also be defined as the following formula (3):

$$S(x; \alpha, \beta) = 1 - F(x; \alpha, \beta) = e^{-\left(\frac{x}{\beta}\right)^{\alpha}} \tag{3}$$

where $S(x; \alpha, \beta)$ indicates the probability of survival of the cutting tool after the xth cut.

Preferably, a failure data set $X_f$ and a survival data set $X_s$ of the cutting tool under each group of previous cutting parameters are derived on the basis of the tool replacement record of the cutting tool under each group of previous cutting parameters.

For example, the values of the parameters $\alpha$ and $\beta$ of the failure time distribution of the cutting tool may be found by maximizing the logarithmic likelihood of the data values in the failure data set and the survival data set with the following formula (4):

$$\max_{\alpha, \beta} L(\alpha, \beta) = \max_{\alpha, \beta} \sum_{x_f} \ln\left(f(x_f; \alpha, \beta)\right) + \sum_{x_s} \ln\left(S(x_s; \alpha, \beta)\right) \quad s.t. \quad \alpha > 1 \tag{4}$$

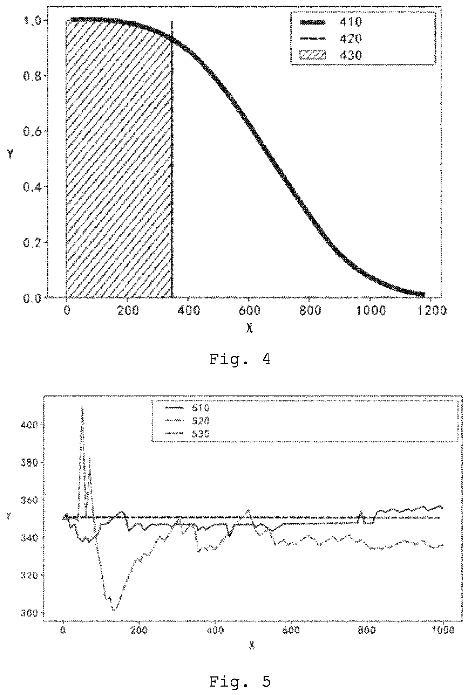

where the constraint $\alpha > 1$ indicates that the tool will undergo a wear process, which causes the tool failure rate to increase with time. The above-mentioned optimization problem may be effectively solved by, for example, the L-BFGS-B algorithm mentioned in the article "Algorithm 778: L-BFGS-B: Fortran Subroutines for Large-scale Bound-constrained Optimization" (ACM Transactions on Mathematical Software (TOMS) 23.4 (1997): 550-560) by Zhu, Ciyou, et al. Figure 4 shows a comparison of the fitted survival function and the experimental survival function of a cutting tool under a group of specific cutting parameters. The x-axis in Figure 4 indicates the number of cuts made, and the y-axis indicates the survival probability. The curve 410 shows the fitted survival function, the preset cutting tool life 410 is a dashed line perpendicular to the x-axis, and the shadow 430 to the left of the dashed line 410 indicates the survival function obtained from experiments.

In another embodiment, the failure time distribution of a cutting tool may also be fitted by a non-parametric method, for example, by using a Kaplan-Meier estimator. The article "Nonparametric Estimation from Incomplete Observations" (Journal of the American Statistical Association 53.282 (1958): 457-481) by Kaplan, Edward L., and Paul Meier describes the Kaplan-Meier estimator.

Preferably, the method further comprises calculating the tool life of the target cutting tool on the basis of a prior distribution of the shape parameter and a prior distribution of the scale parameter for predicting a failure time distribution.

In step 140, a group of predefined cutting parameters of the target cutting tool is received. A "target cutting tool" mentioned herein refers to an unused cutting tool. For example, a user's definition of cutting parameters of an unused cutting tool may be received by using an input interface device, for example a keyboard, a mouse, a touch screen, or a microphone. In another example, a group of predefined cutting parameters of the target cutting tool may also be received wirelessly. The "a group of predefined cutting parameters" is applicable to a specific processing scenario in which an unused cutting tool will be used; in other words, it is a group of unused cutting parameters.

In step 150, the tool life of the target cutting tool is set according to the group of predefined cutting parameters, the at least two groups of previous cutting parameters, and the failure time distribution corresponding to each group of previous cutting parameters.

In one example, setting the tool life of the target cutting tool according to the group of predefined cutting parameters, the at least two groups of previous cutting parameters, and the failure time distribution comprises: calculating a prior distribution of distribution parameters for predicting the failure time distribution of the target cutting tool according to the group of predefined cutting parameters, the at least two groups of previous cutting parameters, and distribution parameters of failure time distribution obtained by fitting with tool replacement records corresponding to the at least two groups of previous cutting parameters; and calculating the tool life of the target cutting tool according to the prior distribution of distribution parameters for predicting the failure time distribution of the target cutting tool.

Preferably, the prior distribution of distribution parameters for predicting the failure time distribution of the target cutting tool includes respective prior distributions of a shape parameter and a scale parameter for predicting a failure time distribution.

Specifically, assume that there are N groups of specific cutting parameters used for the cutting tool in a tool replacement record, where the cutting parameter D = {X, y} = {(xi, yi),.. = 1:N}, and that the corresponding parameter of the failure time distribution of the cutting tool is $\alpha$ or $\beta$ in the Weibull distribution. For example, a Gaussian process may be fitted to deduce a prior distribution (Gaussian distribution) of the distribution parameters of the target cutting tool (expressed as $y_*$) under a group of unused cutting parameters (expressed as $x_*$):

$$P(y_*|\boldsymbol{x}_*, \mathbf{X}, \mathbf{y}) = \mathcal{N}(\boldsymbol{k}_*^T \boldsymbol{K}_y^{-1} \boldsymbol{y}, k_{**} - \boldsymbol{k}_*^T \boldsymbol{K}_y^{-1} \boldsymbol{k}_*) \tag{5}$$

In the preceding equation (5), $\mathbf{k}_* = [k(x_*, x_1), ..., k(x_*, x_N)]$, $\mathbf{K}_y = k(\boldsymbol{X}, \boldsymbol{X}) + \sigma_y^2 \boldsymbol{I}_N$, and $k_{**} = [k(x_*, x_*)]$ are kernel functions, $\sigma_y$ is a hyperparameter indicating the noise in the observed optimal life of the existing cutting tool, and $I_N$ is an N*N-dimensional identity matrix. For details about Gaussian processes and kernel functions, see the article "Gaussian Processes in Machine Learning" by Rasmussen, Carl Edward (in Advanced lectures on machine learning, pages 63-71, Springer, Berlin, Heidelberg, 2004), for example. Substituting $\alpha$ and $\beta$ for $y_*$ allows the prediction of the prior distributions $P(\alpha)$ and $P(\beta)$ of the parameters $\alpha$ and $\beta$ in the failure time distribution of the target cutting tool under a group of unused cutting parameters in this step.

In another example, parameter values of the failure time distribution of the target cutting tool may also be predicted by using another regression model, for example linear regression or SVM regression, instead of a Gaussian process. Since the number of cutting tools is small in most cases, when the sample size is small, a Gaussian process is usually better than any other regression model.

Preferably, the (initial) tool life of the target cutting tool is calculated according to the prior distribution of distribution parameters for predicting the failure time distribution of the target cutting tool. Assuming $P(\alpha) = \mathcal{N}(\mu_\alpha, \sigma_\alpha^2)$ and $P(\beta) = \mathcal{N}(\mu_\beta, \sigma_\beta^2)$, the $\gamma$th percentile for predicting the failure time distribution of the target cutting tool may be calculated by the inverse CDF function, as expressed in the following formula (6):

$$F^{-1}(\gamma) = \mu_\beta(-\ln(1 - \gamma))^{1/\mu_\alpha} \tag{6}$$

$F^{-1}(\gamma)$ indicates the maximum number of cuts after which the failure probability of the cutting tool is lower than the user-defined threshold $\gamma$, that is, the estimated optimal life of the target cutting tool. Under unused cutting parameters, $\mu_\beta(-\ln(1-\gamma))^{1/\mu_\alpha}$ is used as the initial life of the target cutting tool (it may be deemed a prior estimate of the optimal life of the target cutting tool, and no replacement records have been observed for this tool).

Preferably, in step 160, a tool replacement record of the target cutting tool under the group of predefined cutting parameters is recorded; in step 170, a prior distribution of distribution parameters for predicting the failure time distribution of the target cutting tool is calculated according to the group of predefined cutting parameters, the at least two groups of previous cutting parameters, and distribution parameters of failure time distribution obtained by fitting with tool replacement records corresponding to the at least two groups of previous cutting parameters; in step 180, the tool life of the target cutting tool is updated by using the tool replacement record of the target cutting tool and a prior distribution of distribution parameters for predicting the failure time distribution of the target cutting tool.

In an example, step 180 further comprises: on the basis of the tool replacement record of the target cutting tool, deriving a failure data set and a survival data set of the target cutting tool when the group of predefined cutting parameters is used, wherein the failure data set includes a tool replacement record indicating that the target cutting tool was replaced due to a target cutting tool failure during the $(x_f)$th cut, where $x_f \square X_f$, and the survival data set includes a tool replacement record indicating that the target cutting tool had survived by the $(x_s)$th cut and was replaced when its preset service life ended, where $x_s \square X_s$; calculating a posterior distribution of distribution parameters of the failure time distribution of the target cutting tool by using the tool replacement record of the target cutting tool and a prior distribution of distribution parameters for predicting the failure time distribution of the target cutting tool; and updating the tool life of the target cutting tool on the basis of the posterior distribution of distribution parameters of the failure time distribution of the target cutting tool.

Preferably, a posterior distribution of distribution parameters for predicting the failure time distribution of the target cutting tool includes respective posterior distributions of a shape parameter and a scale parameter for predicting a failure time distribution. When the target cutting tool is actually used, a maximum a posteriori probability (MAP) estimate of the distribution parameters $\alpha$ and $\beta$ is calculated to dynamically update the optimal life after each tool replacement.

Specifically, $P(\alpha, \beta | D) = \frac{P(\alpha, \beta) P(D | \alpha, \beta)}{P(D)}$ is obtained by Bayesian inference, where D indicates an observed tool replacement record of the target cutting tool. Then, an MAP estimate of the distribution parameters $\alpha$ and $\beta$ is calculated by solving the following optimization problem:

$$\max_{\alpha,\beta} \ln P(\alpha) + \ln P(\beta) + \sum_{x_f} \ln\left(f(x_f; \alpha, \beta)\right) + \sum_{x_s} \ln\left(S(x_s; \alpha, \beta)\right) \quad s.t. \quad \alpha > 1 \quad (7)$$

Algorithms such as L-BFGS-B may be used to effectively solve the preceding optimization problem again. After an MAP estimate of the distribution parameters $\alpha$ and $\beta$ is calculated, a posterior estimate of the optimal life may be updated each time a replacement record is observed. For the L-BFGS-B algorithm, reference may be made to the article "Optimum Tool Replacement Policies with Penalty Cost for Unforeseen Tool Failure" by La Commare, U., S. Noto La Diega, and A. Passannanti (International Journal of Machine Tool Design and Research 23.4 (1983): 237-243). In another example, an estimate of the overall distribution of distribution parameters may also be proposed on the basis of a Bayesian method for the optimal life.

Preferably, the method further comprises updating the tool life of the target cutting tool on the basis of at least a posterior distribution of the shape parameter and a posterior distribution of the scale parameter for predicting a failure time distribution.

Posterior estimation of the optimal life should be more robust than maximum likelihood estimation of the optimal life, especially when the number of observed tool replacement records of the target cutting tool is small. In addition, by dynamically adjusting the optimal life after each tool replacement, as more and more tool replacement records are observed, the optimal life value will quickly converge to the true optimal value.

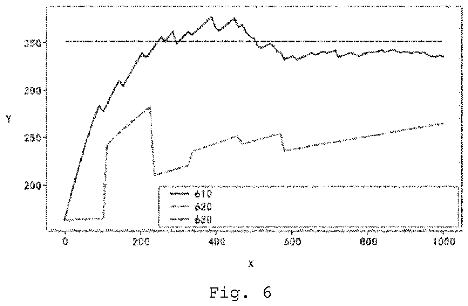

Assuming that the failure time distribution of the cutting tool is known, this distribution is used to fit certain tool replacement records based on some given life settings. Then, the dynamically adjusted optimal life is compared with the baseline, which is the maximum likelihood estimate (MLE) of the optimal life given some observed tool replacement records. The results are shown in Figures 5 and 6. In Figure 5, the x-axis indicates the number of cutting tool replacement records, and the y-axis indicates the calculated optimal life. It is clear that the dynamically adjusted optimal life 510 was more robust than the MLE 520, although they were both very close to the true optimal life 530 starting from the initial life. The reason is that the MLE is very sensitive to a deviation in data, especially when the number of observed tool replacement records is small. However, the apriority possessed by a method of the present invention allows an effective reduction of the impact of a deviation. In Figure 6, the x-axis indicates the number of cutting tool replacement records, and the y-axis indicates the calculated optimal life. It is clear that although they were both far away from the true optimal life 630 starting from the initial life, the dynamically adjusted optimal life 610 quickly converged to the true optimal life 630. In contrast, after the record of the 1000th tool replacement was observed, the MLE 620 was still far from the true optimal state. This showed the importance of the proposed dynamic strategy in setting the optimal life.

Compared with a conventional static method, a tool life setting method of the present invention is more efficient, robust, and versatile, because it is driven by data and does not require great expertise or tool failure experiments to set the optimal life of a tool under unused cutting parameters. Compared with a conventional dynamic method, a tool life setting method of the present invention is more economical because it does not require any additional hardware (such as a sensor) for monitoring the wear status of a cutting tool to determine its optimal service life. In addition, the present invention further provides a strategy for dynamically adjusting the optimal service life of a cutting tool. Based on tool replacement records alone, a tool life setting method of the present invention is easier to develop and less expensive.

Other Variants

Figure 2 shows a block diagram for a tool life setting computational device 200 provided by an embodiment of the present invention. According to an embodiment, the computational device 200 may comprise at least one memory 210 and at least one processor 220. In one embodiment, a machine-executable instruction is stored in the memory 210 (comprising a machine-readable medium), and the processor 220 is configured to call the machine-executable instruction. The machine-executable instruction, when executed by the at least one processor 210, causes the at least one processor 210 to implement the above-described method steps.

An embodiment of the present invention provides a machine-readable medium storing a machine-executable instruction that, when executed by a processor, enables the processor to execute any of the above methods. Specifically, a system or apparatus may be provided that is equipped with a machine-readable medium storing a software program code for implementing the functions of any of the embodiments described above, and a computer or processor of the system or apparatus is caused to read out and execute a machine-executable instruction stored in the machine-readable medium.

In this case, the program code read from the machine-readable medium itself can implement the functions of any of the above embodiments, and therefore the machine-readable code and the machine-readable medium storing the machine-readable code constitute a part of the present invention.

Examples of machine-readable media include floppy disk, hard disk, magneto-optical disk, optical disk (for example, CD-ROM, CD-R, CD-RW, DVD-ROM, DVD-RAM, DVD-RW, and DVD+RW), magnetic tape, non-volatile memory card, and ROM. Alternatively, program code may be downloaded from a server computer or cloud via a communication network.

In each of the above embodiments, a hardware unit may be implemented mechanically or electrically. For example, a hardware unit may comprise a permanently dedicated circuit or logic (for example, a special processor, an FPGA, or an ASIC) for completing corresponding operations. A hardware unit may further comprise programmable logic or circuitry (for example, a general-purpose processor or any other programmable processor), which may be temporarily configured by software to perform corresponding operations. Specific implementations (mechanical, or dedicated permanent circuits, or temporarily configured circuits) may be determined on the basis of cost and time considerations.

Figure 3 is a structural block diagram of a tool life setting computational system 300 provided by an embodiment of the present invention.

The tool life setting computational system 300 comprises a tool life setting apparatus 310 and a recording unit 320. The tool life setting apparatus 310 may comprise a receiving unit 312 and a computational unit 314. Preferably, the receiving unit 312 is configured to obtain a plurality of groups of previous cutting parameters of a cutting tool and a tool replacement record of the cutting tool under the plurality of groups of previous cutting parameters. The computational unit 314 is configured to respectively fit the failure time distribution of the cutting tool on the basis of a tool replacement record of the cutting tool under each group of previous cutting parameters in the plurality of groups of previous cutting parameters, receive a group of predefined cutting parameters of the target cutting tool, and set the tool life of the target cutting tool according to the group of predefined cutting parameters, the plurality of groups of previous cutting parameters, and the failure time distribution.

The cutting parameters include at least one of the types in the following group: cutting feed speed, rotation speed, cutting duration, and material of the workpiece to be processed. Those of ordinary skill in the art can also predict other cutting parameters suitable for fitting a failure time distribution.

In one example, the computational unit 314 is further configured to derive a failure data set and a survival data set of the cutting tool under each group of previous cutting parameters on the basis of the tool replacement record of the cutting tool under each group of previous cutting parameters, and, according to the failure data set and the survival data set, determine distribution parameters of the failure time distribution of the tool replacement records for each group of previous cutting parameters. In one example, the failure time distribution of the cutting tool is fitted using the Weibull distribution, and the distribution parameters include a shape parameter ($\alpha$) and a scale parameter ($\beta$).

In another example, the computational unit 314 is further configured to calculate a prior distribution of distribution parameters for predicting a failure time distribution of the target cutting tool according to the group of predefined cutting parameters, the plurality of groups of previous cutting parameters, and the distribution parameters, and calculate the tool life of the target cutting tool according to the prior distribution of distribution parameters for predicting the failure time distribution of the target cutting tool. Preferably, the prior distribution of distribution parameters for predicting the failure time distribution of the target cutting tool includes respective prior distributions of a shape parameter and a scale parameter for predicting a failure time distribution. More preferably, the tool life of the target cutting tool is calculated on the basis of a prior distribution of the shape parameter and a prior distribution of the scale parameter for predicting a failure time distribution.

In one example, the recording unit 320 is configured to keep a tool replacement record of the target cutting tool under a group of predefined cutting parameters, and send the tool replacement record of the target cutting tool to a receiving unit of the tool life setting apparatus. Preferably, the receiving unit 314 is further configured to obtain a tool replacement record of the target cutting tool under the group of predefined cutting parameters. Preferably, the computational unit is further configured to update the tool life of the target cutting tool by using the tool replacement record of the target cutting tool.

In one example, the computational unit is further configured to, on the basis of the tool replacement record of the target cutting tool, derive a failure data set and a survival data set of the target cutting tool under the group of predefined cutting parameters, calculate the posterior distribution probability of a shape parameter and a scale parameter of the failure time distribution of the target cutting tool by using the tool replacement record of the target cutting tool, calculate a shape parameter and a scale parameter of the failure time distribution of the target cutting tool according to the failure data set and the survival data set of the target cutting tool and the posterior distribution probability of the shape parameter and the scale parameter of the failure time distribution of the target cutting tool, and update the tool life of the target cutting tool on the basis of the shape parameter and the scale parameter of the failure time distribution of the target cutting tool.

It should be noted that not all the steps or modules in the above-described flows and system structural diagrams are required, and certain steps or modules may be omitted as needed. The sequence of performing steps is not fixed and may be adjusted as needed. The system structures described in the above embodiments may be physical structures or logical structures; in other words, certain modules may be implemented as the same physical entity, or certain modules may be implemented as a plurality of physical entities separately, or certain modules may be jointly implemented by certain components in a plurality of standalone devices.

While the present invention has been described and illustrated in detail above with reference to the drawings and preferred embodiments, the present invention is not limited to these disclosed embodiments, and more embodiments of the present invention may be obtained by combining the code auditing means in the different embodiments described above, as can be appreciated by those of ordinary skill in the art on the basis of the above-mentioned embodiments; these embodiments also fall within the scope of protection of the present invention.

In summary, an embodiment of the present invention provides a cutting tool life setting method, apparatus, and system on the basis of tool replacement records. The method comprises the following steps: obtaining at least two groups of previous cutting parameters of a cutting tool; for each of the obtained at least two groups of previous cutting parameters, obtaining at least two tool replacement records of the cutting tool when the group of previous cutting parameters is used; fitting the failure time distribution of the cutting tool on the basis of the at least two tool replacement records of the cutting tool when the group of previous cutting parameters is used; receiving a group of predefined cutting parameters of a target cutting tool; and setting the tool life of the target cutting tool according to the group of predefined cutting parameters, the at least two groups of previous cutting parameters, and the failure time distribution corresponding to each group of previous cutting parameters. Compared with a conventional static method, the method of the present invention is more efficient, robust, and versatile. Compared with a conventional dynamic method, the method of the present invention is more economical. The present invention further provides a strategy for dynamically adjusting the optimal service life of a cutting tool.

**Claims**

1.  A cutting tool life setting method (100), which comprises:

    obtaining at least two groups of previous cutting parameters of a cutting tool (110);
    for each of the obtained at least two groups of previous cutting parameters,
    obtaining at least two tool replacement records of the cutting tool when the group of previous cutting parameters is used (120);
    fitting the failure time distribution of the cutting tool on the basis of the at least two tool replacement records of the cutting tool when the group of previous cutting parameters is used (130);
    receiving a group of predefined cutting parameters of a target cutting tool (140); and
    setting the tool life of the target cutting tool according to the group of predefined cutting parameters, the at least two groups of previous cutting parameters, and the failure time distribution corresponding to each group of previous cutting parameters (150).

2.  The setting method (100) as claimed in claim 1, wherein fitting the failure time distribution of the cutting tool on the basis of the at least two tool replacement records of a cutting tool when a group of previous cutting parameters is used comprises:

    on the basis of at least two tool replacement records of the cutting tool when the group of previous cutting parameters is used, deriving a failure data set $X_f$ and a survival data set $X_s$ of the cutting tool when the group of previous cutting parameters is used, wherein the failure data set includes a tool replacement record indicating that the cutting tool was replaced due to a cutting tool failure during the $(x_f)$th cut,
    where $x_f \square X_f$, and the survival data set includes a tool replacement record indicating that the cutting tool had survived by the $(x_s)$th cut and was replaced when its preset service life ended, where $x_s \square X_s$; and
    determining distribution parameters of the failure time distribution corresponding to the group of previous cutting parameters according to the failure data set and the survival data set, so that the likelihood of data in the two data sets including the failure data set and the survival data set is maximized.

3.  The setting method (100) as claimed in claim 1 or 2, wherein setting the tool life of the target cutting tool according to the group of predefined cutting parameters, the at least two groups of previous cutting parameters, and the failure time distribution comprises:

    calculating a prior distribution of distribution parameters for predicting the failure time distribution of the target cutting tool according to the group of predefined cutting parameters, the at least two groups of previous cutting parameters, and
    distribution parameters of failure time distribution obtained by fitting with tool replacement records corresponding to the at least two groups of previous cutting parameters; and
    calculating the tool life of the target cutting tool according to the prior distribution of distribution parameters for predicting the failure time distribution of the target cutting tool.

4. The setting method (100) as claimed in claim 3, wherein

the prior distribution of distribution parameters for predicting the failure time distribution of the target cutting tool includes respective prior distributions of a shape parameter and a scale parameter for predicting a failure time distribution; and

wherein the method further comprises calculating the tool life of the target cutting tool on the basis of a prior distribution of the shape parameter and a prior distribution of the scale parameter for predicting a failure time distribution.

5. The setting method (100) as claimed in claim 1 or 2, which further comprises:

keeping a tool replacement record of a target cutting tool when the group of predefined cutting parameters is used (160);

calculating a prior distribution of distribution parameters for predicting the failure time distribution of the target cutting tool according to the group of predefined cutting parameters, the at least two groups of previous cutting parameters, and

distribution parameters of failure time distribution obtained by fitting with tool replacement records corresponding to the at least two groups of previous cutting parameters (170); and updating the tool life of the target cutting tool by using the tool replacement record of the target cutting tool and a prior distribution of distribution parameters for predicting the failure time distribution of the target cutting tool (180).

6. The setting method (100) as claimed in claim 5, wherein updating the tool life of the target cutting tool by using the tool replacement record of the target cutting tool and a prior distribution of distribution parameters for predicting the failure time distribution of the target cutting tool (180) comprises:

on the basis of the tool replacement record of the target cutting tool, deriving a failure data set and a survival data set of the target cutting tool when the group of predefined cutting parameters is used, wherein the failure data set includes a tool replacement record indicating that the target cutting tool was replaced due to a target cutting tool failure during the $(x_f)$th cut, where $x_\varepsilon \square X_f$, and the survival data set includes a tool replacement record indicating that the target cutting tool had survived by the $(x_s)$th cut and was replaced when its preset service life ended, where $x_s \square X_s$;

calculating a posterior distribution of distribution parameters of the failure time distribution of the target cutting tool by using the tool replacement record of the target cutting tool and a prior distribution of distribution parameters for predicting the failure time distribution of the target cutting tool; and

updating the tool life of the target cutting tool on the basis of the posterior distribution of distribution parameters of the failure time distribution of the target cutting tool.

7. The setting method (100) as claimed in claim 6, wherein a posterior distribution of distribution parameters for predicting the failure time distribution of the target cutting tool includes respective posterior distributions of a shape parameter and a scale parameter for predicting a failure time distribution; and

wherein the method further comprises updating the tool life of the target cutting tool on the basis of at least a posterior distribution of the shape parameter and a posterior distribution of the scale parameter for predicting a failure time distribution.

8. The setting method (100) as claimed in any one of claims 1 to 7, wherein the cutting parameters include at least one from the group of: cutting feed speed, rotation speed, cutting duration, and material of the workpiece to be processed.

9. A machine-readable medium, storing a machine-executable instruction configured to, when executed by a suitable machine or processor, cause the machine or processor to implement the setting method (100) as claimed in any one of claims 1 to 8.

10. A computational device (200), which comprises:

at least one memory (210) for storing a machine-executable instruction; and
at least one processor (220), which is used for calling the machine-executable instruction, which, when executed by the at least one processor, causes the at least one processor to implement the setting method (100) as claimed in any one of claims 1 to 8.

**11.** A cutting tool life setting apparatus (310), which comprises:

a receiving unit (312) configured to obtain at least two groups of previous cutting parameters of a cutting tool, and at least two tool replacement records of the cutting tool when each of the at least two groups of previous cutting parameters is used; and
a computational unit (314) configured to

fit the failure time distribution of the cutting tool on the basis of the at least two tool replacement records of a cutting tool when each group of previous cutting parameters is used;
receive a group of predefined cutting parameters of a target cutting tool; and
set the tool life of the target cutting tool according to the group of predefined cutting parameters, the at least two groups of previous cutting parameters, and the failure time distribution corresponding to each group of previous cutting parameters.

**12.** The setting apparatus (310) as claimed in claim 11,

wherein the computational unit (314) is further configured to, on the basis of at least two tool replacement records of the cutting tool when each group of previous cutting parameters is used, derive a failure data set $X_f$ and a survival data set $X_s$ of the cutting tool when the group of previous cutting parameters is used, wherein the failure data set includes a tool replacement record indicating that the cutting tool was replaced due to a cutting tool failure during the $(x_f)$th cut, where $x_f \square X_f$, and the survival data set includes a tool replacement record indicating that the cutting tool had survived by the $(x_s)$th cut and was replaced when its preset service life ended, where $x_s \square X_s$; and
determining distribution parameters of the failure time distribution corresponding to the group of previous cutting parameters according to the failure data set and the survival data set, so that the likelihood of data in the two data sets including the failure data set and the survival data set is maximized.

**13.** The setting apparatus (310) as claimed in claim 11 or 12, wherein the computational unit (314) is further configured to calculate a prior distribution of distribution parameters for predicting the failure time distribution of the target cutting tool according to the group of predefined cutting parameters, the at least two groups of previous cutting parameters, and distribution parameters of failure time distribution obtained by fitting with tool replacement records corresponding to the at least two groups of previous cutting parameters; and calculate the tool life of the target cutting tool according to the prior distribution of distribution parameters for predicting the failure time distribution of the target cutting tool.

**14.** The setting apparatus (310) as claimed in claim 13,

wherein the prior distribution of distribution parameters for predicting the failure time distribution of the target cutting tool includes respective prior distributions of a shape parameter and a scale parameter for predicting a failure time distribution; and
wherein the computational unit (314) is further configured to calculate the tool life of the target cutting tool on the basis of a prior distribution of the shape parameter and a prior distribution of the scale parameter for predicting a failure time distribution.

**15.** A computational system (300) for calculating cutting tool life, which comprises:

the cutting tool life setting apparatus (310) as claimed in any one of claims 11 to 14; and
a recording unit (320) configured to keep a tool replacement record of a target cutting tool when a group of predefined cutting parameters is used, and to send the tool replacement record of the target cutting tool to a receiving unit of the setting apparatus.

**Patentansprüche**

**1.** Verfahren zur Einstellung der Standzeit eines Schneidwerkzeugs (100), das Folgendes umfasst:

Erhalten von mindestens zwei Gruppen vorheriger Schneidparameter eines Schneidwerkzeugs (110);
für jede der erhaltenen mindestens zwei Gruppen von vorherigen Schneidparametern,
Erhalt von mindestens zwei Werkzeugwechseldatensätzen des Schneidwerkzeugs, wenn die Gruppe der vorherigen Schneidparameter verwendet wird (120);
Anpassen der Ausfallzeitverteilung des Schneidwerkzeugs auf der Grundlage der mindestens zwei Werkzeugwechseldatensätze des Schneidwerkzeugs, wenn die Gruppe der vorherigen Schneidparameter verwendet wird (130);
Empfang einer Gruppe von vordefinierten Schneidparametern eines Ziel-Schneidwerkzeugs (140); und
Einstellen der Standzeit des Ziel-Schneidwerkzeugs in Abhängigkeit von der Gruppe der vordefinierten Schneidparameter, den mindestens zwei Gruppen vorheriger Schneidparameter und der jeder Gruppe vorheriger Schneidparameter (150) entsprechenden Ausfallzeitverteilung.

2. Einstellverfahren (100) nach Anspruch 1, wobei das Anpassen der Ausfallzeitverteilung des Schneidwerkzeugs auf der Grundlage der mindestens zwei Werkzeugwechseldatensätze eines Schneidwerkzeugs bei Verwendung einer Gruppe von vorherigen Schneidparametern Folgendes umfasst:

auf der Grundlage von mindestens zwei Werkzeugwechseldatensätzen des Schneidwerkzeugs, wenn die Gruppe der vorherigen Schneidparameter verwendet wird, Ableitung eines Ausfalldatensatzes $X_f$ und eines Überlebensdatensatzes $X_s$ des Schneidwerkzeugs, wenn die Gruppe der vorherigen Schneidparameter verwendet wird, wobei der Ausfalldatensatz einen Werkzeugwechseldatensatz enthält, der anzeigt, dass das Schneidwerkzeug aufgrund eines Schneidwerkzeugversagens während des $(x_f)$-ten Schnitts ausgetauscht wurde, wobei $x_f \in X_f$, und der Überlebensdatensatz einen Werkzeugwechseldatensatz enthält, der anzeigt, dass das Schneidwerkzeug bis zum $(x_s)$-ten Schnitt überlebt hatte und ausgetauscht wurde, als seine voreingestellte Standzeit endete, wobei $x_s \in X_s$; und
Bestimmen von Verteilungsparametern der Ausfallzeitverteilung, die der Gruppe von vorherigen Schneidparametern gemäß dem Ausfalldatensatz und dem Überlebensdatensatz entspricht, so dass die Wahrscheinlichkeit von Daten in den beiden Datensätzen, einschließlich des Ausfalldatensatzes und des Überlebensdatensatzes, maximiert wird.

3. Einstellverfahren (100) nach Anspruch 1 oder 2, wobei das Einstellen der Standzeit des Ziel-Schneidwerkzeugs gemäß der Gruppe von vordefinierten Schneidparametern, den mindestens zwei Gruppen von vorherigen Schneidparametern und der Ausfallzeitverteilung Folgendes umfasst:

Berechnen einer Vorabverteilung von Verteilungsparametern zur Vorhersage der Ausfallzeitverteilung des Ziel-Schneidwerkzeugs gemäß der Gruppe von vordefinierten Schneidparametern, den mindestens zwei Gruppen von vorherigen Schneidparametern und Verteilungsparametern der Ausfallzeitverteilung, die durch Anpassen mit Werkzeugwechseldatensätzen erhalten wurden, die den mindestens zwei Gruppen von vorherigen Schneidparametern entsprechen; und
Berechnen der Standzeit des Ziel-Schneidwerkzeugs entsprechend der Vorverteilung der Verteilungsparameter zur Vorhersage der Ausfallzeitverteilung des Ziel-Schneidwerkzeugs.

4. Einstellverfahren (100) nach Anspruch 3, wobei die Vorverteilung von Verteilungsparametern zur Vorhersage der Ausfallzeitverteilung des Ziel-Schneidwerkzeugs entsprechende Vorverteilungen eines Formparameters und eines Skalenparameters zur Vorhersage einer Ausfallzeitverteilung enthält; und
wobei das Verfahren ferner das Berechnen der Standzeit des Ziel-Schneidwerkzeugs auf der Grundlage einer Vorverteilung des Formparameters und einer Vorverteilung des Skalenparameters zur Vorhersage einer Ausfallzeitverteilung umfasst.

5. Einstellverfahren (100) nach Anspruch 1 oder 2, das ferner Folgendes umfasst:

Führen eines Werkzeugwechseldatensatzes für ein Ziel-Schneidwerkzeug, wenn die Gruppe der vordefinierten Schneidparameter verwendet wird (160);
Berechnen einer Vorabverteilung von Verteilungsparametern zur Vorhersage der Ausfallzeitverteilung des Ziel-Schneidwerkzeugs gemäß der Gruppe von vordefinierten Schneidparametern, den mindestens zwei Gruppen von vorherigen Schneidparametern und Verteilungsparametern der Ausfallzeitverteilung, die durch Anpassen mit Werkzeugwechseldatensätzen erhalten wurden, die den mindestens zwei Gruppen von vorherigen Schneidparametern (170) entsprechen; und
Aktualisieren der Standzeit des Ziel-Schneidwerkzeugs unter Verwendung des Werkzeugwechseldatensatzes des Ziel-Schneidwerkzeugs und einer vorherigen Verteilung von Verteilungsparametern zur Vorhersage der Ausfallzeitverteilung des Ziel-Schneidwerkzeugs (180).

6. Einstellverfahren (100) nach Anspruch 5, wobei das Aktualisieren der Standzeit des Ziel-Schneidwerkzeugs unter Verwendung des Werkzeugwechseldatensatzes des Ziel-Schneidwerkzeugs und einer vorherigen Verteilung von Verteilungsparametern zum Vorhersagen der Ausfallzeitverteilung des Ziel-Schneidwerkzeugs (180) Folgendes umfasst:

auf der Grundlage des Werkzeugwechseldatensatzes des Ziel-Schneidwerkzeugs, Ableiten eines Ausfalldatensatzes und eines Überlebensdatensatzes des Ziel-Schneidwerkzeugs, wenn die Gruppe von vordefinierten Schneidparametern verwendet wird, wobei der Ausfalldatensatz einen Werkzeugwechseldatensatz enthält, der anzeigt, dass das Ziel-Schneidwerkzeug aufgrund eines Ziel-Schneidwerkzeugversagens während des $(x_f)$-ten Schnitts ausgetauscht wurde, wobei $x_f \square X_f$, und der Überlebensdatensatz einen Werkzeugwechseldatensatz enthält, der anzeigt, dass das Ziel-Schneidwerkzeug bis zum $(x_s)$-ten Schnitt überlebt hatte und ausgetauscht wurde, als seine vorgegebene Standzeit endete, wobei $x_s \square X_s$;
Berechnen einer Nachverteilung von Verteilungsparametern der Ausfallzeitverteilung des Ziel-Schneidwerkzeugs unter Verwendung des Werkzeugwechseldatensatzes des Ziel-Schneidwerkzeugs und einer Vorverteilung von Verteilungsparametern zur Vorhersage der Ausfallzeitverteilung des Ziel-Schneidwerkzeugs; und
Aktualisieren der Standzeit des Ziel-Schneidwerkzeugs auf der Grundlage der Nachverteilung der Verteilungsparameter der Ausfallzeitverteilung des Ziel-Schneidwerkzeugs.

7. Einstellverfahren (100) nach Anspruch 6, wobei die Nachverteilung von Verteilungsparametern zur Vorhersage der Ausfallzeitverteilung des Ziel-Schneidwerkzeugs entsprechende Nachverteilungen eines Formparameters und eines Skalenparameters zur Vorhersage einer Ausfallzeitverteilung enthält; und
wobei das Verfahren ferner das Aktualisieren der Standzeit des Ziel-Schneidwerkzeugs auf der Grundlage von mindestens einer Nachverteilung des Formparameters und einer Nachverteilung des Skalenparameters zur Vorhersage einer Ausfallzeitverteilung umfasst.

8. Einstellverfahren (100) nach einem der Ansprüche 1 bis 7, wobei die Schneidparameter mindestens einen aus der Gruppe der folgenden Parameter umfassen: Schneidvorschubgeschwindigkeit, Drehgeschwindigkeit, Schneiddauer und Material des zu bearbeitenden Werkstücks.

9. Maschinenlesbares Medium, das einen maschinenausführbaren Befehl speichert, der so konfiguriert ist, dass er, wenn er von einer geeigneten Maschine oder einem Prozessor ausgeführt wird, die Maschine oder den Prozessor veranlasst, das Einstellverfahren (100) nach einem der Ansprüche 1 bis 8 durchzuführen.

10. Berechnungsvorrichtung (200), die Folgendes umfasst:

mindestens einen Speicher (210) zum Speichern eines maschinenausführbaren Befehls; und
mindestens einen Prozessor (220), der zum Aufrufen des maschinenausführbaren Befehls verwendet wird, der, wenn er von dem mindestens einen Prozessor ausgeführt wird, den mindestens einen Prozessor veranlasst, das Einstellverfahren (100) nach einem der Ansprüche 1 bis 8 durchzuführen.

11. Vorrichtung (310) zum Einstellen der Standzeit eines Schneidwerkzeugs, die Folgendes umfasst:

eine Empfangseinheit (312), die so ausgebildet ist, dass sie mindestens zwei Gruppen von vorherigen Schneidparametern eines Schneidwerkzeugs und mindestens zwei Werkzeugwechseldatensätze des Schneidwerkzeugs erhält, wenn jede der mindestens zwei Gruppen von vorherigen Schneidparametern verwendet wird; und
eine Recheneinheit (314), die für Folgendes ausgebildet ist:

Anpassen der Ausfallzeitverteilung des Schneidewerkzeugs auf der Grundlage der mindestens zwei Werkzeugwechseldatensätze eines Schneidewerkzeugs, wenn jede Gruppe der vorherigen Schneidparameter verwendet wird;
Empfangen einer Gruppe von vordefinierten Schneidparametern eines Ziel-Schneidwerkzeugs; und
Einstellen der Standzeit des Ziel-Schneidwerkzeugs in Abhängigkeit von der Gruppe der vordefinierten Schneidparameter, den mindestens zwei Gruppen vorheriger Schneidparameter und der jeder Gruppe vorheriger Schneidparameter entsprechenden Ausfallzeitverteilung.

**12.** Einstellvorrichtung (310) nach Anspruch 11, wobei die Recheneinheit (314) ferner so ausgebildet ist, dass sie auf der Grundlage von mindestens zwei Werkzeugwechseldatensätzen des Schneidwerkzeugs, wenn jede Gruppe vorheriger Schneidparameter verwendet wird, einen Ausfalldatensatz $X_f$ und einen Überlebensdatensatz $X_s$ des Schneidwerkzeugs ableitet, wenn die Gruppe vorheriger Schneidparameter verwendet wird, wobei der Ausfalldatensatz einen Werkzeugwechseldatensatz enthält, der anzeigt, dass das Schneidwerkzeug aufgrund eines Schneidwerkzeugversagens während des ($x_f$)-ten Schnitts ausgetauscht wurde, wobei $x_f \square X_f$, und der Überlebensdatensatz einen Werkzeugwechseldatensatz enthält, der anzeigt, dass das Schneidwerkzeug bis zum ($x_s$)-ten Schnitt überlebt hatte und ausgetauscht wurde, als seine vorgegebene Standzeit endete, wobei $x_s \square X_s$; und
Bestimmen von Verteilungsparametern der Ausfallzeitverteilung, die der Gruppe von vorherigen Schneidparametern gemäß dem Ausfalldatensatz und dem Überlebensdatensatz entspricht, so dass die Wahrscheinlichkeit von Daten in den beiden Datensätzen, einschließlich des Ausfalldatensatzes und des Überlebensdatensatzes, maximiert wird.

**13.** Einstellvorrichtung (310) nach Anspruch 11 oder 12, wobei die Recheneinheit (314) ferner so ausgebildet ist, dass sie eine Vorverteilung von Verteilungsparametern zur Vorhersage der Ausfallzeitverteilung des Ziel-Schneidwerkzeugs gemäß der Gruppe von vordefinierten Schneidparametern, den mindestens zwei Gruppen von vorherigen Schneidparametern und Verteilungsparametern der Ausfallzeitverteilung berechnet, die durch Anpassen mit Werkzeugwechseldatensätzen erhalten werden, die den mindestens zwei Gruppen von vorherigen Schneidparametern entsprechen; und
Berechnen der Standzeit des Ziel-Schneidwerkzeugs entsprechend der Vorverteilung der Verteilungsparameter zur Vorhersage der Ausfallzeitverteilung des Ziel-Schneidwerkzeugs.

**14.** Einstellvorrichtung (310) nach Anspruch 13, wobei die Vorverteilung von Verteilungsparametern zur Vorhersage der Ausfallzeitverteilung des Ziel-Schneidwerkzeugs entsprechende Vorverteilungen eines Formparameters und eines Skalenparameters zur Vorhersage einer Ausfallzeitverteilung enthält; und
wobei die Recheneinheit (314) ferner so ausgebildet ist, dass sie die Standzeit des Ziel-Schneidwerkzeugs auf der Grundlage einer Vorverteilung des Formparameters und einer Vorverteilung des Skalenparameters berechnet, um eine Ausfallzeitverteilung vorherzusagen.

**15.** Berechnungssystem (300) zum Berechnen der Standzeit von Schneidwerkzeugen, das Folgendes umfasst:

die Einstellvorrichtung (310) für die Standzeit des Schneidwerkzeugs nach einem der Ansprüche 11 bis 14; und eine Aufzeichnungseinheit (320), die ausgebildet ist, um einen Werkzeugwechseldatensatz eines Ziel-Schneidwerkzeugs zu führen, wenn eine Gruppe von vordefinierten Schneidparametern verwendet wird, und um den Werkzeugwechseldatensatz des Ziel-Schneidwerkzeugs an eine Empfangseinheit der Einstellvorrichtung zu senden.

## Revendications

**1.** Procédé de réglage de durée de vie d'outil de coupe (100), qui comprend :

l'obtention d'au moins deux groupes de paramètres de coupe précédents d'un outil de coupe (110) ;
pour chacun des au moins deux groupes de paramètres de coupe précédents obtenus,
l'obtention d'au moins deux enregistrements de remplacement d'outil de l'outil de coupe lorsque le groupe de paramètres de coupe précédents est utilisé (120) ;
l'ajustement de la distribution des temps de défaillance de l'outil de coupe sur la base des au moins deux enregistrements de remplacement d'outil de l'outil de coupe lorsque le groupe de paramètres de coupe précédents est utilisé (130) ;
la réception d'un groupe de paramètres de coupe prédéfinis d'un outil de coupe cible (140) ; et
le réglage de la durée de vie d'outil de l'outil de coupe cible en fonction du groupe de paramètres prédéfini, des au moins deux groupes de paramètres de coupe précédents, et de la distribution des temps de défaillance correspondant à chaque groupe de paramètres de coupe précédents (150).

**2.** Procédé de réglage (100) selon la revendication 1, dans lequel l'ajustement de la distribution des temps de défaillance de l'outil de coupe sur la base des au moins deux enregistrements de remplacement d'outil d'un outil de coupe lorsqu'un groupe de paramètres de coupe précédents est utilisé comprend :

sur la base d'au moins deux enregistrements de remplacement d'outil de l'outil de coupe lorsque le groupe de paramètres de coupe précédents est utilisé, la déduction d'un ensemble de données de défaillance $X_f$ et d'un ensemble de données de survie $X_s$ de l'outil de coupe lorsque le groupe de paramètres de coupe précédents est utilisé, l'ensemble de données de défaillance incluant un enregistrement de remplacement d'outil indiquant que l'outil de coupe a été remplacé en raison d'une défaillance de l'outil de coupe lors de la $(x_f)$ ième coupe, où $x_\varepsilon \square X_f$, et l'ensemble de données de survie incluant un enregistrement de remplacement d'outil indiquant que l'outil de coupe a survécu au-delà de la $(x_s)$ième coupe et a été remplacé lorsque sa durée de vie prédéfinie a expiré, où $x_s \square X_s$ ; et

la détermination de paramètres de distribution de la distribution des temps de défaillance correspondant au groupe de paramètres de coupe précédents en fonction de l'ensemble de données de défaillance et de l'ensemble de données de survie, de sorte que la probabilité de données dans les deux ensembles de données, incluant l'ensemble de données de défaillance et l'ensemble de données de survie, soit maximisée.

3. Procédé de réglage (100) selon la revendication 1 ou 2, dans lequel le réglage de la durée de vie d'outil de l'outil de coupe cible en fonction du groupe de paramètres de coupe prédéfinis, des au moins deux groupes de paramètres de coupe précédents, et de la distribution des temps de défaillance comprend :

le calcul d'une distribution antérieure de paramètres de distribution pour prévoir la distribution des temps de défaillance de l'outil de coupe cible en fonction du groupe de paramètres de coupe prédéfinis, des au moins deux groupes de paramètres de coupe précédents, et de paramètres de distribution de la distribution des temps de défaillance obtenus par ajustement avec des enregistrements de remplacement d'outil correspondant aux au moins deux groupes de paramètres de coupe précédents ; et

le calcul de la durée de vie d'outil de l'outil de coupe cible en fonction de la distribution antérieure de paramètres de distribution pour prédire la distribution des temps de défaillance de l'outil de coupe cible.

4. Procédé de réglage (100) selon la revendication 3, dans lequel la distribution antérieure de paramètres de distribution pour prédire la distribution des temps de défaillance de l'outil de coupe cible comprend des distributions antérieures respectives d'un paramètre de forme et d'un paramètre d'échelle pour prédire une distribution des temps de défaillance ; et

le procédé comprenant en outre le calcul de la durée de vie d'outil de l'outil de coupe cible sur la base d'une distribution antérieure du paramètre de forme et d'une distribution antérieure du paramètre d'échelle pour prédire une distribution des temps de défaillance.

5. Procédé de réglage (100) selon la revendication 1 ou 2, qui comprend en outre :

la conservation d'un enregistrement de remplacement d'outil d'un outil de coupe cible lorsque le groupe de paramètres de coupe précédents est utilisé (160) ;

le calcul d'une distribution antérieure de paramètres de distribution pour prévoir la distribution des temps de défaillance de l'outil de coupe cible en fonction du groupe de paramètres de coupe prédéfinis, des au moins deux groupes de paramètres de coupe précédents, et de paramètres de distribution de la distribution des temps de défaillance obtenus par ajustement avec des enregistrements de remplacement d'outil correspondant aux au moins deux groupes de paramètres de coupe précédents (170) ; et

la mise à jour de la durée de vie d'outil de l'outil de coupe cible au moyen de l'enregistrement de remplacement d'outil de l'outil de coupe cible et d'une distribution antérieure de paramètres de distribution pour prédire la distribution des temps de défaillance de l'outil de coupe cible (180).

6. Procédé de réglage (100) selon la revendication 5, dans lequel la mise à jour de la durée de vie d'outil de l'outil de coupe cible au moyen de l'enregistrement de remplacement d'outil de l'outil de coupe cible et d'une distribution antérieure de paramètres de distribution pour prédire la distribution des temps de défaillance de l'outil de coupe cible (180) comprend :

sur la base de l'enregistrement de remplacement d'outil de l'outil de coupe, la déduction d'un ensemble de données de défaillance et d'un ensemble de données de survie de l'outil de coupe cible lorsque le groupe de paramètres de coupe prédéfinis est utilisé, l'ensemble de données de défaillance incluant un enregistrement de remplacement d'outil indiquant que l'outil de coupe cible a été remplacé en raison d'une défaillance de l'outil de coupe cible lors de la $(x_f)$ ième coupe, où $x_f \square X_f$, et l'ensemble de données de survie incluant un enregistrement de remplacement d'outil indiquant que l'outil de coupe cible a survécu au-delà de la $(x_s)$ ième coupe et a été remplacé lorsque sa durée de vie prédéfinie a expiré, où $x_s \square X_s$ ;

le calcul d'une distribution postérieure de paramètres de distribution de la distribution des temps de défaillance de l'outil de coupe cible au moyen de l'enregistrement de remplacement d'outil de l'outil de coupe cible et d'une distribution antérieure de paramètres de distribution pour prédire la distribution des temps de défaillance de l'outil de coupe cible ; et

la mise à jour de la durée de vie d'outil de l'outil de coupe cible sur la base de la distribution postérieure de paramètres de distribution de la distribution des temps de défaillance de l'outil de coupe cible.

**7.** Procédé de réglage (100) selon la revendication 6, dans lequel la distribution postérieure de paramètres de distribution pour prédire la distribution des temps de défaillance de l'outil de coupe cible inclut des distributions postérieures respectives d'un paramètre de forme et d'un paramètre d'échelle pour prédire une distribution des temps de défaillance ; et

le procédé comprenant en outre la mise à jour de la durée de vie d'outil de l'outil de coupe cible sur la base d'au moins une distribution postérieure du paramètre de forme et d'une distribution postérieure du paramètre d'échelle pour prédire une distribution des temps de défaillance.

**8.** Procédé de réglage (100) selon l'une quelconque des revendications 1 à 7, dans lequel les paramètres de coupe incluent au moins l'un des paramètres du groupe suivant : vitesse d'avance de coupe, vitesse de rotation, durée de coupe, et matériau de la pièce à usiner.

**9.** Support lisible par une machine stockant une instruction exécutable par une machine, configurée pour, lorsqu'elle est exécutée par une machine ou un processeur approprié, amène la machine ou le processeur à mettre en oeuvre le procédé de réglage (100) selon l'une quelconque des revendications 1 à 8.

**10.** Dispositif informatique (200), qui comprend :

au moins une mémoire (210) pour stocker une instruction exécutable par une machine ; et
au moins un processeur (220), qui est utilisé pour appeler l'instruction exécutable par une machine, qui, lorsqu'elle est exécutée par l'au moins un processeur, amène l'au moins un processeur à mettre en oeuvre le procédé de réglage (100) selon l'une quelconque des revendications 1 à 8.

**11.** Appareil de réglage de durée de vie d'outil de coupe (310), qui comprend :

une unité réceptrice (312) configurée pour obtenir au moins deux groupes de paramètres de coupe précédents d'un outil de coupe, et au moins deux enregistrements de remplacement d'outil de l'outil de coupe lorsque chacun des au moins deux groupes de paramètres de coupe précédents est utilisé ; et
une unité de calcul (314) configurée pour
ajuster la distribution des temps de défaillance de l'outil de coupe sur la base des au moins deux enregistrements de remplacement d'outil d'un outil de coupe lorsque chaque groupe de paramètres de coupe précédents est utilisé ;
recevoir un groupe de paramètres de coupe prédéfinis d'un outil de coupe cible ; et
régler la durée de vie d'outil de l'outil de coupe cible en fonction du groupe de paramètres de coupe prédéfinis, des au moins deux groupes de paramètres de coupe précédents, et de la distribution des temps de défaillance correspondant à chaque groupe de paramètres de coupe précédents.

**12.** Appareil de réglage (310) selon la revendication 11, dans lequel l'unité de calcul (314) est en outre configurée pour, sur la base d'au moins deux enregistrements de remplacement d'outil de l'outil de coupe lorsque chaque groupe de paramètres de coupe précédents est utilisé, déduire un ensemble de données de défaillance $X_f$ et un ensemble de données de survie $X_s$ de l'outil de coupe lorsque le groupe de paramètres de coupe précédents est utilisé, l'ensemble de données de défaillance incluant un enregistrement de remplacement d'outil indiquant que l'outil de coupe a été remplacé en raison d'une défaillance de l'outil de coupe lors de la ($x_f$) ième coupe, où $x_f \square X_f$, et l'ensemble de données de survie incluant un enregistrement de remplacement d'outil indiquant que l'outil de coupe a survécu au-delà de la ($x_s$)ième coupe et a été remplacé lorsque sa durée de vie prédéfinie a expiré, où $x_s \square X_s$ ; et déterminer des paramètres de distribution de la distribution des temps de défaillance correspondant au groupe de paramètres de coupe précédents en fonction de l'ensemble de données de défaillance et de l'ensemble de données de survie, de sorte que la probabilité de données dans les deux ensembles de données, incluant l'ensemble de données de défaillance et l'ensemble de données de survie, soit maximisée.

**13.** Appareil de réglage (310) selon la revendication 11 ou 12, dans lequel l'unité de calcul (314) est en outre configurée pour calculer une distribution antérieure de paramètres de distribution pour prévoir la distribution des temps de défaillance de l'outil de coupe cible en fonction du groupe de paramètres de coupe prédéfinis, des au moins deux groupes de paramètres de coupe précédents, et de paramètres de distribution de la distribution des temps de défaillance obtenus par ajustement avec des enregistrements de remplacement d'outil correspondant aux au moins deux groupes de paramètres de coupe précédents ; et

calculer la durée de vie d'outil de l'outil de coupe cible en fonction de la distribution antérieure de paramètres de distribution pour prédire la distribution des temps de défaillance de l'outil de coupe cible.

14. Appareil de réglage (310) selon la revendication 13, dans lequel la distribution antérieure de paramètres de distribution pour prédire la distribution des temps de défaillance de l'outil de coupe cible inclut des distributions antérieures respectives d'un paramètre de forme et d'un paramètre d'échelle pour prédire une distribution des temps de défaillance ; et

l'unité de calcul (314) étant en outre configurée pour calculer la durée de vie d'outil de l'outil de coupe cible sur la base d'une distribution antérieure du paramètre de forme et d'une distribution antérieure du paramètre d'échelle pour la prédiction d'une distribution des temps de défaillance.

15. Système informatique (300) pour calculer une durée de vie d'outil de coupe, qui comprend :

l'appareil de réglage de durée de vie d'outil de coupe (310) selon l'une quelconque des revendications 11 à 14 ; et
une unité d'enregistrement (320) configurée pour conserver un enregistrement de remplacement d'outil d'un outil de coupe cible lorsqu'un groupe de paramètres de coupe prédéfinis est utilisé, et pour envoyer l'enregistrement de remplacement d'outil de l'outil de coupe cible à une unité de réception de l'appareil de réglage.

100

```
┌─────────────────────┐
│         110         │
└─────────────────────┘
           │
           ▼
┌─────────────────────┐
│         120         │
└─────────────────────┘
           │
           ▼
┌─────────────────────┐
│         130         │
└─────────────────────┘
           │
           ▼
┌─────────────────────┐
│         140         │
└─────────────────────┘
           │
           ▼
┌─────────────────────┐
│         150         │
└─────────────────────┘
           │
           ▼
┌─────────────────────┐
│         160         │
└─────────────────────┘
           │
           ▼
┌─────────────────────┐
│         170         │
└─────────────────────┘
           │
           ▼
┌─────────────────────┐
│         180         │
└─────────────────────┘
```

Fig. 1

200

210    220

Fig. 2

300

310

312 ← 320

314

Fig. 3

EP 3 904 983 B1

Fig. 4

Fig. 5

22

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0509817 A1

- US 2018181105 A1

**Non-patent literature cited in the description**

- **ZHU, CIYOU.** Algorithm 778: L-BFGS-B: Fortran Subroutines for Large-scale Bound-constrained Optimization. *ACM Transactions on Mathematical Software (TOMS),* 1997, vol. 23 (4), 550-560
- **NONPARAMETRIC ESTIMATION FROM INCOMPLETE OBSERVATIONS ; KAPLAN, EDWARD L. ; PAUL MEIER.** *Journal of the American Statistical Association,* 1958, vol. 53 (282), 457-481

- Gaussian Processes in Machine Learning. **RASMUSSEN, CARL EDWARD.** Advanced lectures on machine learning. Springer, 2004, 63-71
- **LA COMMARE, U. ; S. NOTO LA DIEGA ; A. PASSANNANTI.** Optimum Tool Replacement Policies with Penalty Cost for Unforeseen Tool Failure. *International Journal of Machine Tool Design and Research,* 1983, vol. 23 (4), 237-243